(19) Europäisches Patentamt

European Patent Office

Office européen des brevets

(11) Publication number: **0 435 329 A2**

## (12) EUROPEAN PATENT APPLICATION

(21) Application number: 90125697.4

(22) Date of filing: 28.12.90

(51) Int. Cl.5: **A46B 13/02, A46B 15/00**

(30) Priority: 29.12.89 BE 8901389
09.03.90 BE 9000273

(43) Date of publication of application:
**03.07.91 Bulletin 91/27**

(84) Designated Contracting States:
**BE CH DE FR GB IT LI NL**

(71) Applicant: **Staar Development Company -S.A.**
**479 Avenue Louise**
**B-1050 Bruxelles(BE)**

(72) Inventor: **Staar, Marcel**
**479 av. Louise**
**B-1050 Bruxelles(BE)**

(74) Representative: **Baronetzky, Klaus et al**
**Patentanwalte Dipl.-Ing. R. Splanemann, Dr.**
**B. Reitzner, Dipl.-Ing. K. Baronetzky Tal 13**
**W-8000 München 2(DE)**

(54) **Tooth brush system.**

(57) A tooth brush system comprises a handle (1), a motor means and a preferably interchangeable brush portion (6) and is characterized in that the bristles (7) of the brush portion (6) are connected to the motor means (X) for providing movement of the bristles (7) substantially in the direction of the bristle axis.

FIG. 8

The invention relates to a tooth brush system according to the opening part of claim 1.

Such tooth brush systems usually comprise an electric motor which is adapted to move the tooth brush in a sweeping direction such that the user's teeth are wiped. These systems provide a brush moving with large amplitudes in several directions of movements in order to ensure the desired sweeping effect.

Some users do not find this kind of tooth brush systems very convenient such that - though owning such tooth brush system - a normal, mechanical tooth brush is used instead.

In order to improve the acceptance of tooth brush systems, it is known from EP-0 028 578 A1 to provide a tooth brush with a sound system which is said to have a good psychologic effect.

Also, it is known from this publication to switch on the music for a certain period of time such as three minutes in order to give a note to the user when he may stop to clean her or his teeth.

However, this system is not as effective as the known intensively sweeping electric tooth brush systems.

Therefore, one object of the present invention is to provide a tooth brush system according to the opening part of claim 1 which allows to combine an improved acceptance with the effective elimination of dental plaque or tartar usually forming on the teeth.

This object is settled by claim 1. Advantageous developments may be taken from the subclaims.

A surprising and essential effect of the invention is that the tooth brush system according to the invention creates an enjoyable feeling when music is supplied to the motor means.

By using low amplitude vibrations acting in the direction of the bristle axis, a good sound conducting connection is achieved reaching from the motor means to the teeth and thus the head bones which are acustically connected to user's ears.

The surprising feature is achieved that no or nearly no music may be heard at the time of non-use even if the motor means are operated but music may be heard at the time of contact between the teeth and the bristles of the brush.

Another very advantageous effect of the invention may be taken from the stiffness of the bristles in the direction of their axis. By moving the bristles with somewhat high frequencies in this direction, they act destructively on dental plaque and tartar layers such that the remainders of such layers may be rinsed off later.

It is believed that his effect also helps in avoiding the formation of tartar layers as even thin tartar layers may be destructed by such effect. This is supported by the fact that usually dentists use ultrasonic implements for removing tartar while according to the invention something similar to such a ultrasonic tartar remover is achieved by a tooth brush system.

According to the invention, high frequency but low amplitude vibrations are used. While pulse or square vibrations are advantageous for removing tartar, a rhythm-like or music-like action of the brush will lead to the highest acceptance by user. Of course, it is possible to switch between different kinds of signal sources at user's discretion.

Further advantages, features and details of the invention may be taken from the following description of some examples of the invention explaining the enclosed drawings.

Fig. 1    shows a general side view of a first embodiment of the invention;

Fig. 2    shows the embodiment according to Fig. 1 from below;

Fig. 3    shows another embodiment similar to the embodiment according to Fig. 1;

Fig. 4    shows a tooth brush system with an interchangeable brush portion according to a further embodiment of the invention;

Fig. 5    shows an alternative brush portion for the embodiment according to Fig. 4;

Fig. 6    shows different kinds of wave forms to be supplied to the motor means from the signal source according to several embodiments of the invention;

Fig. 7    shows a block diagram according to one embodiment of the invention;

Fig. 8    shows a further preferred embodiment of a tooth brush system;

Fig. 9    shows a detail out of Fig. 8;

Fig. 10   shows a transmitter and power system for the embodiment according to Fig. 8; and

Fig. 11   shows a block diagram of a last embodiment of the invention.

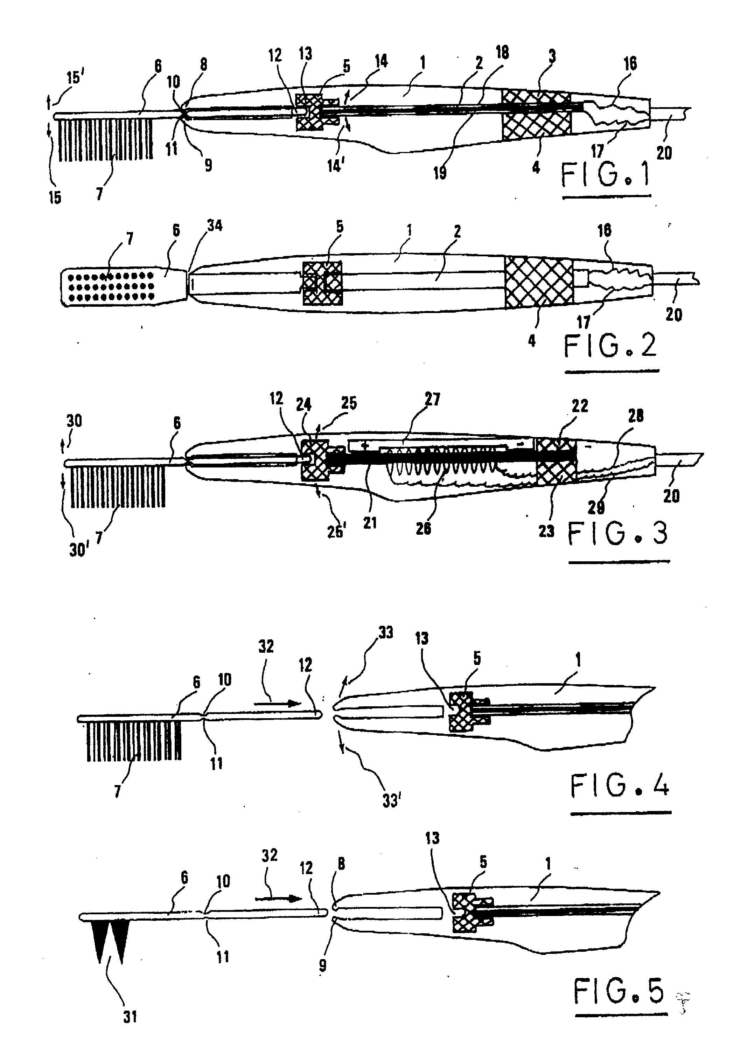

In Fig. 1 a handle 1 is shown on which a blade of piezo-electric crystal or ceramic 2 is mounted. The crystal 2 is fixed on one end by support pieces 3 and 4 which may be bond to the handle 1.

At the other end of the blade 2 a coupling being made of rubber 5 is provided. A brush portion 6 carries a brush 7. The brush portion 6 is mounted in the handle at tabs 8 and 9 which are bond to the handle 1 and are resilient. These resilient tabs maintain the brush portion 6 by means of recesses 10 and 11 in a front opening of the handle 1 and allow the brush portion 6 to pivot within certain limits.

The end 12 of the brush portion 6 is engaged with slight pressure in a recess 13 of rubber part 5.

Bending movements of the piezo-electric blade in the direction of the arrows 14-14', will force part 6 to pivot, and the bristles of the brush 7 will follow the movement in the direction of the arrows 15-15'.

FIG. 2 is a plane vue of the cut view of FIG. 1.

It can be seen that the electric wires 16-17 are connected to the electrodes 18-19 placed on the faces of the piezo-electric crystal 2 through a sheath 20 connecting the handle to separated electric control elements.

When, as explained further, electric currents is applied to the electrodes 18-19, the piezo-electric blade bends, following the applied polarities, in one or another direction in ratio of the importance of the electric currents applied.

In FIG. 1 and 2, the crystal or ceramic blade 2 in an example of a motor element from a piezo-electric effect, and FIG. 3 gives an example of an electromagnetic motor element.

One end of the ferro-magnetic blade 21 is maintained by parts 22-23 bond to the handle,

A part 24, bond to the other end of the blade 21 may receive the end 12 of part 6, bond to the brush and accompanied in its movements in the direction of the arrows 25-25'.

The loops of the electric wire bobin 26, surrounds the ferro-magnetic blade 21, in the field of a permanent magnet 27 bond to the handle 1.

Depending of the direction and the importance of the applied currents on the bobin 27 by supply wires 28-29, the blade 21 will be attracted or repulse by the magnet 27, and the blade will bend alternatively in the direction of the arrows 25-25' and will move the brush 7 in the direction of the arrows 30-30',

FIG. 4 and 5 gives an example of an anchoraging system allowing the interchangeability of the brushes or other cleaning instruments.

Part 6 may carry a brush 7 or, for example, interdental points 31,in rubber.

By introducing the support 6 in the direction of the arrow 32 in the handle 1, this one will momentarily discart the flexible tabs 8-9 in the direction of the arrows 33-33' until they can penetrate the grooves 10-11, and the tabs 8-9 while closing again, maintain part 6 until a reverse manoeuvre.

When part 6 comes against the limit abutment 34 (FIG.2), the round end 12 has placed itself in the cavity 13 of part 5 and will be bond all that time to its movements.

FIG. 6 gives examples of the kind of signals able to command motor systems destinated to move the brush in the desired rhythm.

For example, as shown in A, a sinusoidal frequency; or as in B, a square wave frequency able to force, with certain types of motors, to more abrupt movements; or also like in C, frequencies which are modulated on a certain rhythm, and generate waves breaking the monotony of single frequencies which could be perceived by some users as otherwise boring, as for example continuous 12.000 cycles.

Different kinds of musical recordings, example D, may be choosen to combine a range of usefull frequencies for adequate cleaning movements, to the pleasure of a musical audition.

The direction of the bristle movements of the brush being choosen to take benefit of the rigidity of the bristles in the direction of the cleaning axis movements, those are very performing, and if the motors are on the musical frequencies rhythm, those can be very well perceived by the vibrations conducted by the bones to the auditif system of the user.

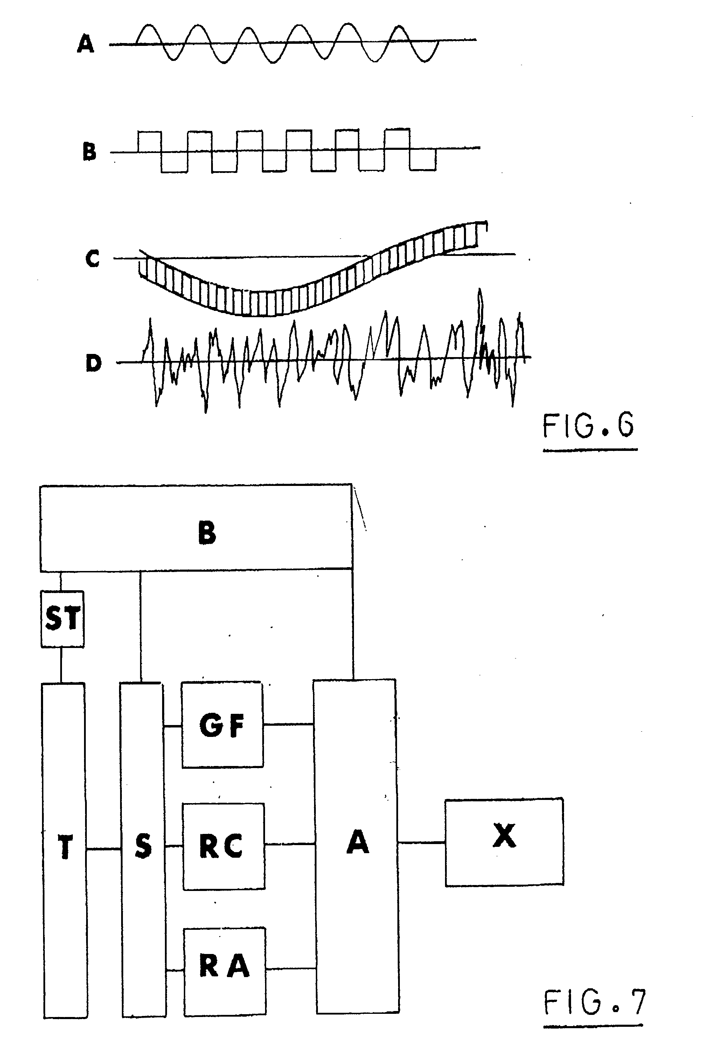

FIG. 7 gives a bloc diagram of a functional system of the unit.

In B is shown a power supply with electrical batteries, and a time selector ST allows for example to choose that the timer T will feed the system for example during 1, 2 or 3 minutes.

The selector S allows to choose for example a uniform frequency of 10.000 cycles:second from a frequency generator GF, or, for example musical tunes from a reproducer of recordings of a magnetic tape cassette RC, or, for example from a radio receiver RA.

The source of a uniform frequency or whatever musical selected frequencies is amplified by the bloc A which will feed the motor X destinated to move the cleaning instrument.

Some of the elements such as recording reproducers and power supplies are separated of the handle and connected by an electrical wire.

When the generation of uniform or musical frequencies are limited, those may be generated by electronic memory circuits of a sufficiently small volume that they can be mounted directly in the handle 1, in which a large physical volume can be used, as well as to house batteries which can be recharged during the time the toothbrush is not used and placed during that time in a holding support like this is very well known and very classically used for many apparatuses and therefore do not require to be described.

In this case the system is autonomous and is not limited in its freedom of manipulation by a feeding wire.

In certain cases, it could be advantageous to choose a frequency near the self resonance frequency of the motor system.

The bristles of the brush are very rigid in the direction of their axis and act on the teeth like a multitude of minuscule hammers able to remove by infinitesimal chips the unwanted material film on the teeth surface.

PREFERENTIAL CONSTRUCTION.

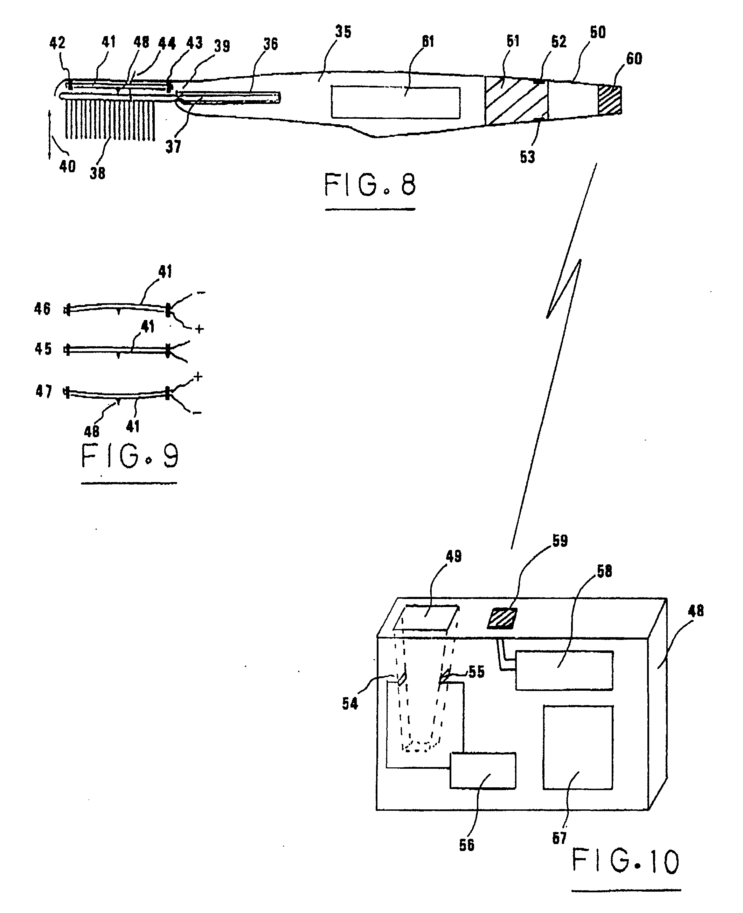

FIG. 8 gives a preferential construction.

A handle 35 may receive in a cavity 36 an interchangeable support 37 which is carrying the bristles of a brush 38.

This support 37 is maintained in spring loaded pivoting points 39 and allows the brush 38 to move in the direction of the arrow 40.

A piézo-électric ceramic blade 41 is maintained in the handle 35 by the rings 42-43 so that it could bend in the direction of the arrows 44 when the blade is excited.

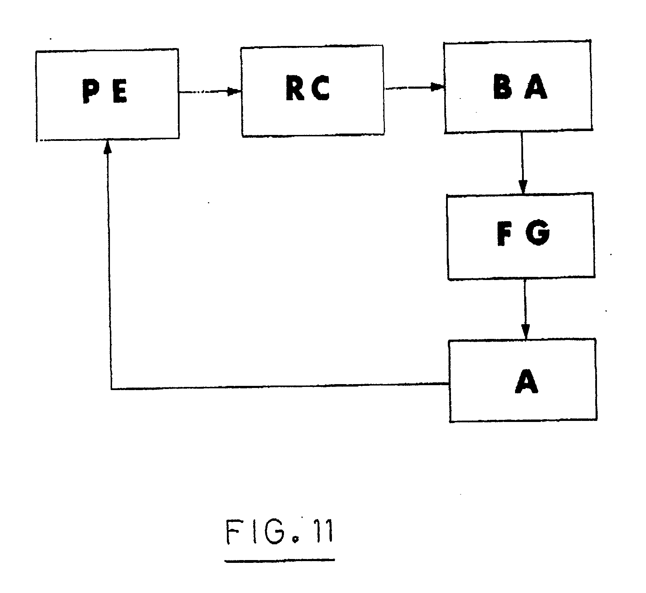

FIG. 9 shows how the piezo-eletrio ceramic blade is normally flat when not feeded (45) and becomes convex (46) or concave (47) depending of the current polarity applied.

As the support 37 is floating, when the bruh 38 is put in contact with the teeth, the piezo-electric blade movements are communicated to the brush by a little hard rubber stud 48 and make the brush vibrates in the direction of the arrows 40.

From thereon, the blade 41 could be feeded on the required frequencies as in the previous examples.

FIG. 10 gives an example of a prefered mode of feeding the brush with the kind of choosen frequencies.

A housing 48 contains batteries or a low-tension power supply.

A cavity 49 may receive the end 50 of the handle 35 when the toothbrush is not used.

At that moment the contact studs 52-53 of a rechargeable battery 51 are put in contact with the studs 54-55 of a battery charger 56.

The housing 48 may contain also a system 57 for generating simple or musical frequencies as suggested before (generators, magnetic or optical sound reproducers, electronic memories ...).

Those frequencies may be amplified by 58 and send to an infra-red transmitter 59.

An infra-red receiver 60 is provided in the handle 35 and the informations are amplified by 61 powered by the battery 51 and will be fed in the piezo-electric blade 41, and the bristles of the brush 38 will move in the direction of the arrows 40.

The handle is constructed in such a way that the infra-red receiver 60 will always protube out of the hand of the user so as to achieve a perfect informations reception at any time.

In the example of FIG. 1, 2 and 8, we can see that when feeding properly the piezo-electric ceramic blades 2 or 41 they will generate mechanical movements.

This piezo-electric effect is reversible, it is to say that when mechanical pressure is applied to the ceramic or crystal, it will create electrical currents.

As a lot of low frequency mechanical energy is supplied by the hand or the user during all the brushing time, this overpowered lost mechanical energy could be eventually transformed in electricity to feed the components of the unit or be stored in a buffer battery.

This recuperated electrical power could then be used, when solicited, to generate and amplify the high frequencies currents which are then injected bach to the ceramic blade.

So the ceramic blade 2 or 41 will move at the same time on a low frequency, generated by the mechanical action of the hand of the user, and on high frequencies due to the feeded electrical currents.

The technique to separate ranges of different frequencies and rectify alternating irrégular currents with filters and diodes is very well known in classical electronic circuits, and we give in FIG. 11 a bloc diagram of the principle.

A piezo-electric blade is represented in PE.

The aleatory uneven alternating very low frequency currents due to the irregular hand pressure action on the piezo-electric ceramic are rectified in RC and stored in a battery BA which can powered a high frequency generator FG and amplified by A.

Those high frequencies currents could then be injected in the piezo-electric ceramic PE.

## Claims

1. Tooth brush system, having a handle, a motor means and a preferably interchangeable brush portion, **characterized** in that the bristles (7) of the brush portion (6) are connected to the motor means (X) for providing movement of the bristles (7) substantially in the direction of the bristle axis.

2. Tooth brush system according to claim 1, characterized in that the motor means (X) allow a movement of the bristles (7) in a wave form manner, preferably a vibration at audio frequencies or in a uniform or controlled way.

3. Tooth brush system according to one of the preceding claims, characterized in that a floating coupling (5) is provided between the motor means (X) and the brush portion (6), with the brush portion (6) preferably being supported at a support forming a pivot bearing (8) rigidly mounted on said handle, for pivoting on said support (8).

4. Tooth brush system according to one of the preceding claims, characterized in that the handle (1) comprises a front opening extending essentially along its axis for receiving the brush portion (6) in a snap-in connection and that the brush portion (6) is supported on said handle portion (1) close to its front end, with the support (8) being essentially free from play in the direction of the bristles axis and preferably forming a stiff resilient bearing in the direction of the bristles axis.

5. Tooth brush system according to one of the preceding claims, characterized in that the motor means (X) comprise a piezo-electric crystal or blade (2) which is fixed to the handle (1) at one part thereof and being connected to the brush portion (6) at another part thereof, preferably by mounting said blade by brace bodies (3, 4) at one end of the flat piezo-electric crystal (2) and by allowing the other end thereof to move freely and to drive one end of the brush portion (6).

6. Tooth brush system according to one of the preceding claims, characterized in that the motor means (X) comprise electromagnetic drive means having a bobin (27) for driving one end (12) of said brush portion (6) substantially in the direction of the bristle axis and preferably comprising means for pivoting or flexing a blade (21) which is connected to said brush portion (6) via a coupling (24).

7. Tooth brush system according to one of the preceding claims, characterized in that said brush portion (6) comprising bristles (7) is interchangeable with a brush portion (6) comprising interdental cleaner tips (31).

8. Tooth brush system according to one of the preceding claims, characterized in that the motor means (X) are connected to a generator circuit for generating sine waves, square waves, frequency modulated waves, pulses or music at user's discretion or automatically when inter-changing the kind of the brush portion (6).

9. Tooth brush system according to one of the preceding claims, characterized in that the motor means (X) are connected to an amplifier (A) powered by a battery (B), which may be supplied with an electrical signal like a music signal from a music source being provided in the handle (1) and that prefereably a selector (S) is provided for selectively connecting said amplifier (A) with a signal source like a frequency generator (GF), a music source or the like.

10. Tooth brush system according to one of the preceding claims, characterized in that a generator circuit (GF; RC; RA) for supplying the motor means comprises a timer means (T) for activating the motor means (X) for a predefined period of time such as 2 minutes.

11. Tooth brush system according to one of the preceding claims, characterized in that said motor means (X) is fed with a signal generated in a generator circuit (GF; RC; RA) remote of said handle (1) and being transmitted via a radio control means, infrared means or wires.

12. Tooth brush system according to one of the preceding claims characterized in that the motor means (X) comprise a drive blade (41) which is supported on the handle (35) for directly acting on the bristle portion (38) by means of an activating member (48) acting in the direction (40) of the bristles (7) from the side of the brush portion (38) opposite to the bristles (7).

13. Tooth brush system according to one of the preceding claims, characterized in that the motor means (X) also act as electricity generator to be driven by the brush portion (6) for generating electric power which could be used for recharging a battery (61).

14. Tooth brush system according to claim 11, characterized in that low frequency motions of the brush portion (6) generated by the user are automatically converted into electrical power while high frequency signals are introduced into the brush portion (6) via the motor means (X).

FIG.1

FIG.2

FIG.3

FIG.4

FIG.5

A

B

C

D

FIG.6

B

ST

T   S   GF

RC

RA

A   X

FIG.7

FIG. 8

FIG. 9

FIG. 10

FIG. 11